# EUROPÄISCHE PATENTSCHRIFT

(11) **EP 3 658 462 B1**
(45) Veröffentlichungstag und Bekanntmachung des Hinweises auf die Patenterteilung: **14.09.2022**
(21) Anmeldenummer: 18722010.8
(22) Anmeldetag: 27.04.2018
(51) Int. Cl.: B64F 5/10, B21J 13/08, B21J 15/14, B21J 15/42, B23Q 1/62, B23Q 39/02

(54) **BEARBEITUNGSANLAGE FÜR FLUGZEUGSTRUKTURBAUTEILE**
MACHINING FACILITY FOR AIRCRAFT STRUCTURAL COMPONENTS
INSTALLATION D'USINAGE POUR ÉLÉMENTS STRUCTURAUX D'AVIONS

(30) Priorität: 24.07.2017 DE 102017116718
(43) Veröffentlichungstag der Anmeldung: 03.06.2020
(73) Patentinhaber: Broetje-Automation GmbH, 26180 Rastede (DE)
(72) Erfinder: VARRELMANN, Nils, 26316 Varel (DE); NEEMANN, Volker, 26655 Westerstede (DE)
(74) Vertreter: Gottschald Patentanwälte Partnerschaft mbB
(86) Internationale Anmeldenummer: PCT/EP2018/060898
(87) Internationale Veröffentlichungsnummer: WO 2019/020226

(56) Entgegenhaltungen:
- EP-A1- 2 682 225
- EP-A2- 0 956 915
- WO-A1-01/17718
- DE-A1-102006 021 946
- DE-A1-102014 113 663
- US-A- 4 967 947
- US-A1- 2003 024 094
- US-A1- 2014 251 097
- US-A1- 2017 151 643

## Beschreibung

Die Erfindung betrifft eine Bearbeitungsanlage für Flugzeugstrukturbauteile nach dem Oberbegriff des Anspruchs 1 sowie ein Verfahren zur Bearbeitung eines Flugzeugstrukturbauteils mit einer vorschlagsgemäßen Bearbeitungsanlage gemäß dem Oberbegriff des Anspruchs 12.

Bearbeitungsanlagen für Flugzeugstrukturbauteile sind beispielsweise aus der US 4,967,947, der WO 01/17718 A1, der EP 0 956 915 A2 oder der US 2017/0151643 A1 bekannt.

Die Herstellung von Flugkörpern und insbesondere Flugzeugen umfasst die Bearbeitung großer Flugzeugstrukturbauteile wie etwa der Flügel und des Rumpfes oder Teilen davon in speziellen Bearbeitungsanlagen. Die bekannte Bearbeitungsanlage (US 5,778,505), von der die Erfindung ausgeht, weist eine Bearbeitungsstation mit einem Aufspannrahmen zur Aufnahme des jeweils zu bearbeitenden Flugzeugstrukturbauteils auf. Die Bearbeitungsstation ist ferner mit einer Bearbeitungseinheit in Form einer Nieteinheit ausgestattet, die eine Oberwerkzeugeinheit mit einem Oberwerkzeug und eine zugeordnete Unterwerkzeugeinheit mit einem Unterwerkzeug aufweist, wobei bei einer koaxialen Ausrichtung der Werkzeugachse des Oberwerkzeugs zur Werkzeugachse des Unterwerkzeugs ein Nietvorgang am Flugzeugstrukturbauteil durchgeführt werden kann.

Bei der bekannten Bearbeitungsanlage kann es während der Bearbeitung eines Flugzeugstrukturbauteils vorkommen, dass sich ein Nietelement im das Oberwerkzeug bildenden Nietwerkzeug verklemmt und, häufig von Hand, entfernt werden muss, bevor die Bearbeitung fortgesetzt werden kann. Aufgrund der besonderen Größe einer solchen Bearbeitungsanlage befindet sich das jeweilige Oberwerkzeug mehrere Meter, beispielsweise 6 m, über dem Boden und ist daher vom Servicepersonal nicht ohne Weiteres erreichbar. Um ein verklemmtes Nietelement entfernen oder sonstige Servicearbeiten ausführen zu können, muss daher eine Serviceplattform (Servicebühne) für das Servicepersonal in einen Bereich unterhalb des Oberwerkzeugs gefahren werden, über die die jeweilige Person das Oberwerkzeug bequem erreichen kann. Da das Oberwerkzeug während der Bearbeitung mit einem korrespondierenden Unterwerkzeug zusammenwirkt, ist es für besagte Servicearbeiten unter Umständen auch notwendig, einen dem Unterwerkzeug zugeordneten Unterwerkzeugträger und gegebenenfalls auch den Aufspannrahmen mit dem Flugzeugstrukturbauteil von dem Oberwerkzeug wegzufahren, damit die Serviceplattform platziert werden kann. Entsprechende Arbeiten am Oberwerkzeug sind daher relativ aufwendig und zeitintensiv und führen daher zu relativ langen Stillstandzeiten.

Der Erfindung liegt das Problem zugrunde, die bekannte Bearbeitungsanlage derart auszugestalten und weiterzubilden, dass Servicearbeiten am Oberwerkzeug vereinfacht und servicebedingte Stillstandzeiten verringert werden können.

Das obige Problem wird bei einer Bearbeitungsanlage gemäß dem Oberbegriff von Anspruch 1 durch die Merkmale des kennzeichnenden Teils von Anspruch 1 gelöst.

Wesentlich ist die grundsätzliche Überlegung, dass durch das Vorsehen einer zweiten Oberwerkzeugeinheit ein weiteres Oberwerkzeug zur Verfügung steht, welches nach einem Ausfall des jeweils anderen Oberwerkzeugs die Bearbeitung oder zumindest einen Teil der Bearbeitung des Flugzeugstrukturbauteils an seiner statt durchführen kann. Stillstandzeiten der Bearbeitungsanlage können dadurch erheblich reduziert werden. Im einfachsten Fall wird die Bearbeitung des Flugzeugstrukturbauteils nur für den Zeitraum unterbrochen, in welchem die weitere Oberwerkzeugeinheit anstelle der das ausgefallene Oberwerkzeug aufweisenden Oberwerkzeugeinheit relativ zu dem gemeinsam genutzten Unterwerkzeug platziert wird. Beispielsweise wird, wie im weiteren noch beschrieben wird, die Oberwerkzeugeinheit mit dem ausgefallenen Oberwerkzeug aus dem vorherigen Bearbeitungsbereich herausgefahren, insbesondere in eine Serviceposition, während die weitere Oberwerkzeugeinheit in den entsprechenden Bearbeitungsbereich, insbesondere ebenfalls aus einer Serviceposition heraus, verfahren wird. Auf diese Weise wird ermöglicht, ein Oberwerkzeug zu reparieren oder zu warten, dabei beispielsweise ein verklemmtes Nietelement zu entfernen, während ein weiteres Oberwerkzeug bzw. eine entsprechende weitere Oberwerkzeugeinheit eine Fortführung der Bearbeitung des Flugzeugstrukturbauteils ermöglicht.

Im Einzelnen weist die Bearbeitungseinheit zusätzlich zu einer ersten Oberwerkzeugeinheit mit einer ersten Werkzeugachse, die zu einer zweiten Werkzeugachse eines korrespondieren Unterwerkzeugs koaxial ausgerichtet werden kann, eine zweite Oberwerkzeugeinheit mit einem entlang einer dritten Werkzeugachse ausgerichteten Oberwerkzeug auf, wobei auch die dritte Werkzeugachse zur zweiten Werkzeugachse koaxial ausgerichtet werden kann, wodurch ermöglicht wird, dass die zuvor von der ersten Oberwerkzeugeinheit bzw. dem ersten Oberwerkzeug durchgeführte Bearbeitung von der zweiten Oberwerkzeugeinheit bzw. dem zweiten Oberwerkzeug fortgeführt werden kann. Die zweite Oberwerkzeugeinheit kann also so positioniert werden, dass das zugeordnete Oberwerkzeug in eine Bearbeitungsposition oder in Bearbeitungspositionen positioniert werden kann, die der Bearbeitungsposition bzw. den Bearbeitungspositionen entsprechen, in denen das Oberwerkzeug der ersten Oberwerkzeugeinheit positioniert war oder positioniert werden konnte. In diesen Bearbeitungspositionen wirkt das jeweilige Oberwerkzeug dann mit dem gemeinsamen Unterwerkzeug zusammen, dass in dem Fall eine zugeordnete Bearbeitungsposition einnimmt. Mit einer Bearbeitungsposition des Oberwerkzeugs bzw. Unterwerkzeugs ist eine Position des jeweiligen Werkzeugs gemeint, in der die Bearbeitung des Flugzeugstrukturbauteils möglich ist. Insbesondere handelt es sich bei der Bearbeitung um einen Nietvorgang oder Bohrvorgang.

Es sei darauf hingewiesen, dass zusätzlich zu der zweiten Oberwerkzeugeinheit auch noch eine oder mehrere weitere entsprechende Oberwerkzeugeinheiten vorgesehen sein können, die demselben Zweck dienen. Der Einfachheit halber ist hier nur von einer zweiten Oberwerkzeugeinheit die Rede, wobei die entsprechenden Ausführungen aber auch für jede weitere Oberwerkzeugeinheit, die zusätzlich zu der ersten Oberwerkzeugeinheit vorgesehen sein kann, gelten.

Nach der Ausgestaltung gemäß Anspruch 2 sind die erste Oberwerkzeugeinheit und die zweite Oberwerkzeugeinheit in derselben Richtung verfahrbar. Die Richtung ist insbesondere eine zur Längsrichtung und Höhenrichtung orthogonale Querrichtung. Dabei sind die erste Werkzeugachse und die dritte Werkzeugachse bezogen auf diese Richtung bzw. Querrichtung vorzugsweise über zumindest einen Teil der Verfahrstrecke ohne Versatz zueinander angeordnet (Anspruch 3). Insbesondere besteht über den größten Teil oder die gesamte Verfahrstrecke kein Versatz in besagter Richtung bzw. Querrichtung. Besonders bevorzugt sind die erste Oberwerkzeugeinheit und die zweite Oberwerkzeugeinheit in derselben Ebene, insbesondere in einer zur Höhenrichtung orthogonalen Ebene, verfahrbar (Anspruch 4).

Bei der besonders bevorzugten Ausgestaltung gemäß Anspruch 5 sind die erste Oberwerkzeugeinheit und die zweite Oberwerkzeugeinheit an einer gemeinsamen Führung, insbesondere Linearführung, verfahrbar. Insbesondere weisen die beiden Oberwerkzeugeinheiten jeweils einen eigenen Oberwerkzeugträger auf, über den die Verbindung zur Führung hergestellt wird (Anspruch 6). Dies hat den Vorteil, dass die erste Oberwerkzeugeinheit und die zweite Oberwerkzeugeinheit unabhängig voneinander verlagerbar sind. Grundsätzlich ist es aber auch denkbar, dass das Oberwerkzeug der ersten Oberwerkzeugeinheit und das Oberwerkzeug der zweiten Oberwerkzeugeinheit über einen gemeinsamen Oberwerkzeugträger mit besagter Führung verbunden sind.

Die Führung ist nach der Ausgestaltung gemäß Anspruch 7 Bestandteil eines oberen Gestellteils eines Gestells der Bearbeitungsanlage. Das obere Gestellteil verläuft dabei insbesondere entlang der Querrichtung. Zusätzlich kann das Gestell auch ein unteres Gestellteil, das insbesondere auch entlang der Querrichtung verläuft, sowie ein oder zwei seitliche Gestellteile, die das oberen Gestellteil mit dem unteren Gestellteil verbinden, aufweisen. Das Gestell kann eine portalförmige oder C-förmige Gestalt haben. Die Führung ist bei einem solchen Gestell insbesondere an der Unterseite des oberen Gestellteils, insbesondere in einer Höhe von mindestens 5 m, bevorzugt mindestens 6 m, besonders bevorzugt mindestens 7 m, angeordnet.

Ein solches Gestell ermöglicht eine geeignete Arbeitshöhe zur Bearbeitung von diversen Flugzeugstrukturbauteilen, beispielsweise Rümpfen oder Flügeln. Die Arbeitshöhe, also die Stelle, an der das Oberwerkzeug mit dem Unterwerkzeug bestimmungsgemäß zusammenwirkt, liegt dabei insbesondere in einem Bereich von 5 m bis 7 m, bevorzugt in einem Bereich von 5,5 m bis 6,5 m, besonders bevorzugt in einem Bereich von 5,5 m bis 6 m.

Nach der Ausgestaltung gemäß Anspruch 7 sind die Oberwerkzeugeinheiten unabhängig voneinander verfahrbar und/oder in der Bearbeitungseinheit unabhängig voneinander betreibbar. Insbesondere kann eine der Oberwerkzeugeinheiten außer Betrieb genommen werden, während die andere Oberwerkzeugeinheit mit ihrem Oberwerkzeug die entsprechenden Arbeiten durchführt.

In Anspruch 8 ist definiert, dass dann, wenn eine der Oberwerkzeugeinheiten in bestimmungsgemäßer Verwendung ist, die andere Oberwerkzeugeinheit in einer Serviceposition angeordnet werden kann, in der diese Oberwerkzeugeinheit die Funktionsweise der anderen Oberwerkzeugeinheit insbesondere nicht beeinflusst. Die nicht in der Serviceposition befindliche Oberwerkzeugeinheit lässt sich dadurch so positionieren, dass die zugeordnete Werkzeugachse koaxial zur zweiten Werkzeugachse, das heißt zur Werkzeugachse des Unterwerkzeugs, ausgerichtet werden kann.

Anspruch 9 definiert verschiedene Ausgestaltungen des jeweiligen Oberwerkzeugs bzw. Bestückungen der jeweiligen Oberwerkzeugeinheit mit bestimmten Oberwerkzeugen. Insbesondere kann als Oberwerkzeug ein Nietwerkzeug oder Bohrwerkzeug vorgesehen sein. Auch kann die jeweilige Oberwerkzeugeinheit eine kombinierte Oberwerkzeugeinheit mit einem Nietwerkzeug und einem Bohrwerkzeug sein.

Anspruch 10 definiert Antriebsmöglichkeiten, die die genannten Verfahrbewegungen, insbesondere Linearbewegungen, der ersten und/oder zweiten Oberwerkzeugeinheit ermöglichen.

Nach einer weiteren Lehre gemäß Anspruch 11, der eigenständige Bedeutung zukommt, wird ein Verfahren zur Bearbeitung eines Flugzeugstrukturbauteils mit einer vorschlagsgemäßen Bearbeitungsanlage beansprucht.

Wesentlich nach der weiteren Lehre ist, dass während der Bearbeitung des Flugzeugstrukturbauteils, insbesondere bei einem Nietvorgang oder Bohrvorgang, eine der beiden Oberwerkzeugeinheiten betrieben wird, also das entsprechende Oberwerkzeug die bestimmungsgemäße Betätigung (Nieten oder Bohren) durchführt, während die andere der Oberwerkzeugeinheiten außer Betrieb ist und/oder in besagter Serviceposition angeordnet ist. Es steht somit immer eine Oberwerkzeugeinheit zur Fortführung der Bearbeitung des Flugzeugstrukturbauteils zur Verfügung, wenn eine andere Oberwerkzeugeinheit repariert oder gewartet werden muss.

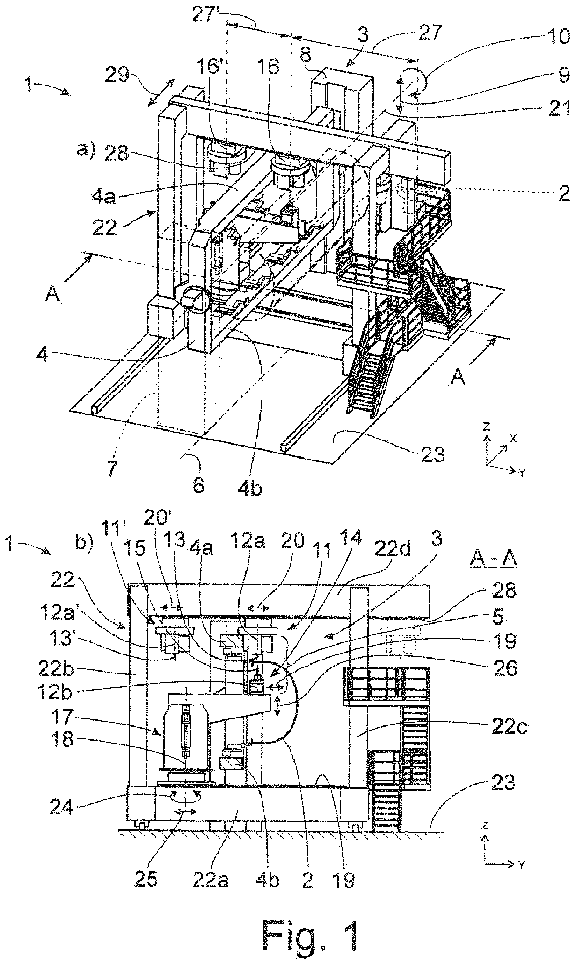

Im Folgenden wird die Erfindung anhand einer lediglich Ausführungsbeispiele darstellenden Zeichnung näher erläutert. In der Zeichnung zeigt
- Fig. 1a: eine vorschlagsgemäße Bearbeitungsanlage während der Bear-beitung eines Flugzeugstrukturbauteils in einer perspektivischen Ansicht und
- Fig. 1b: die Bearbeitungsanlage gemäß Fig. 1a in einer geschnittenen An-sicht.

Die dargestellte Bearbeitungsanlage 1 dient der Bearbeitung von Flugzeugstrukturbauteilen 2, bei denen es sich, wie weiter oben angesprochen, um Rümpfe, Flügel oder andere große Flugzeugstrukturbauteile 2 handeln kann. Die Bearbeitungsanlage 1 weist eine Bearbeitungsstation 3 auf. Die Bearbeitungsstation 3 weist zum Einen einen Aufspannrahmen 4 zur Aufnahme des jeweils zu bearbeitenden Flugzeugstrukturbauteils 2 und zum Anderen eine Bearbeitungseinheit 5 für die Bearbeitung des Flugzeugstrukturbauteils 2 auf.

Der Aufspannrahmen 4 erstreckt sich entlang einer Stationslängsachse 6, die in eine Längsrichtung X der Bearbeitungsanlage 1 verläuft. Die Erstreckung des Aufspannrahmens 4 entlang der Stationslängsachse 6 ist weit zu verstehen. Sie bedeutet, dass der Aufspannrahmen 4 zumindest in einer Grundstellung parallel zu der Stationslängsachse 6 verläuft, beispielsweise wenn der Aufspannrahmen 4 vertikal ausgerichtet ist und/oder horizontal ausgerichtet ist.

Der Aufspannrahmen 4 ist hier und vorzugsweise an zwei Positioniertürmen 7, 8, die sich parallel zur Höhenrichtung Z erstrecken, höhenverstellbar und schwenkbar angelenkt. Die Höhenverstellbarkeit ist in Fig. 1a mit dem Bezugszeichen 9 und die Schwenkbarkeit mit dem Bezugszeichen 10 angedeutet. Dabei kann die Höhenverstellbarkeit 9 für die beiden Positioniertürme 7, 8 getrennt möglich sein, so dass ein Kippen des Aufspannrahmens 4 um eine quer zur Stationslängsachse 6 verlaufende Kippachse (hier nicht dargestellt) realisierbar ist.

Die Bearbeitungseinheit 5 umfasst eine erste Oberwerkzeugeinheit 11 mit einem entlang einer ersten Werkzeugachse 12a ausgerichteten Oberwerkzeug 13 und eine zugeordnete Unterwerkzeugeinheit 14 mit einem entlang einer zweiten Werkzeugachse 12b ausgerichteten Unterwerkzeug 15. Darüber hinaus umfasst die Bearbeitungseinheit 5 mindestens eine zweite Oberwerkzeugeinheit 11', hier und vorzugsweise genau eine zweite Oberwerkzeugeinheit 11', mit einem, entlang einer dritten Werkzeugachse 12a' ausgerichteten, Oberwerkzeug 13', wobei die Unterwerkzeugeinheit 14 gleichermaßen auch der zweiten Oberwerkzeugeinheit 11' zugeordnet ist, also sowohl die erste Oberwerkzeugeinheit 11 als auch die zweite Oberwerkzeugeinheit 11' jeweils mit der Unterwerkzeugeinheit 14 zur Bearbeitung eines Flugzeugstrukturbauteils 2 miteinander zusammenwirken. Die jeweilige Oberwerkzeugeinheit 11, 11' und die gemeinsame Unterwerkzeugeinheit 14 bilden jeweils einen Endeffektor, wobei das jeweilige Oberwerkzeug 13, 13' insbesondere ein Nietkopf oder Bohrkopf ist und das Unterwerkzeug 15 das korrespondierende Gegenstück dazu bildet. Eine der beiden Oberwerkzeugeinheiten 11, 11' oder beide Oberwerkzeugeinheiten 11, 11' können auch mehr als ein Oberwerkzeug 13, 13' aufweisen, insbesondere einen Nietkopf und/oder Bohrkopf. Besonders bevorzugt weisen beide Oberwerkzeugeinheiten 11, 11' jeweils sowohl einen Nietkopf als auch einen Bohrkopf auf.

Indem die Bearbeitungseinheit 5 hier und vorzugsweise zwei Oberwerkzeugeinheiten 11, 11' aufweist, die mit ein und derselben Unterwerkzeugeinheit 14 zusammenwirken können, können die Oberwerkzeugeinheiten 11, 11' einander bei der Bearbeitung des Flugzeugstrukturbauteils 2 im Bedarfsfall ersetzen. Beispielsweise ist es denkbar, dass bei einem Nietvorgang, der von der ersten Oberwerkzeugeinheit 11 mit dem ersten Oberwerkzeug 13 durchgeführt wird, sich ein Nietelement im Oberwerkzeug 13 verklemmt, wodurch diese Oberwerkzeugeinheit 11 vorübergehend nicht mehr funktionsfähig ist. In diesem Fall kann anstelle der ersten Oberwerkzeugeinheit 11 die zweite Oberwerkzeugeinheit 11' mit einem oder mehreren dem bzw. den Oberwerkzeugen 13 der ersten Oberwerkzeugeinheit 11 entsprechenden Oberwerkzeugen 13' betrieben werden, und zwar in Verbindung mit derselben Unterwerkzeugeinheit 14 wie zuvor. Die zweite Oberwerkzeugeinheit 11' übernimmt dann die Funktion der ersten Oberwerkzeugeinheit 11, die in dieser Zeit außer Betrieb genommen wird. In dem Zeitraum, in welchem die erste Oberwerkzeugeinheit 11 außer Betrieb ist, kann diese repariert bzw. gewartet werden. Beispielsweise kann ein verklemmtes Nietelement aus dem Oberwerkzeug 13 entfernt werden. In dieser Zeit kann die Bearbeitungseinheit 5 und somit die gesamte Bearbeitungsanlage 1 weiter betrieben werden. Stillstandzeiten aufgrund einer Reparatur oder Wartung können auf diese Weise minimiert werden.

Die Bearbeitung des Flugzeugstrukturbauteils 2 mithilfe der zweiten Oberwerkzeugeinheit 11' bzw. dem Oberwerkzeug 13' der zweiten Oberwerkzeugeinheit 11' erfolgt dabei bevorzugt auf dieselbe Weise wie die Bearbeitung mittels der ersten Oberwerkzeugeinheit 11 bzw. dem Oberwerkzeug 13 der ersten Oberwerkzeugeinheit 11.

Die erste Werkzeugachse 12a des Oberwerkzeugs 13 der ersten Oberwerkzeugeinheit 11 und die zweite Werkzeugachse 12b des Unterwerkzeugs 15 verlaufen hier in eine Richtung winkelig und insbesondere orthogonal zur Längsrichtung X. Diese Richtung wird hier auch als Höhenrichtung Z bezeichnet. Die erste Werkzeugachse 12a und die zweite Werkzeugachse 12b sind bei dem Ausführungsbeispiel in den Fig. 1a und b in jeder Bearbeitungsposition des Oberwerkzeugs 13 der hier aktivierten ersten Oberwerkzeugeinheit 11 und des Unterwerkzeugs 15 koaxial zueinander ausgerichtet, verlaufen also beide fluchtend in der Höhenrichtung Z. In dem Fall, dass aufgrund einer vorzunehmenden Reparatur oder Wartung die erste Oberwerkzeugeinheit 11 außer Betrieb genommen werden soll, kann diese in eine Serviceposition verfahren werden (in Fig. 1a und b gestrichelt dargestellt) und die zweite Oberwerkzeugeinheit 11' kann, um die weitere Bearbeitung des Flugzeugstrukturbauteils 2 zu übernehmen, von der in den Fig. 1a und b dargestellten linken (inaktiven) Position in die Position verfahren werden, in der sich zuvor die erste Oberwerkzeugeinheit 11 befunden hat. Während der dann erfolgenden weiteren Bearbeitung durch die zweite Oberwerkzeugeinheit 11' verlaufen dann die dritte Werkzeugachse 12a' und die zweite Werkzeugachse 12b ebenfalls in der Richtung winkelig und insbesondere orthogonal zur Längsrichtung X, das heißt der Höhenrichtung Z, wobei auch hier die dritte Werkzeugachse 12a' und die zweite Werkzeugachse 12b koaxial zueinander ausgerichtet sind, also ebenfalls beide in der Höhenrichtung Z fluchten.

Hier und vorzugsweise sind nicht nur die beiden Oberwerkzeugeinheiten 11, 11' verfahrbar, sondern auch die Unterwerkzeugeinheit 14. Die Einstellbarkeit bzw. Verfahrbarkeit des Unterwerkzeugs 15 bzw. der Unterwerkzeugeinheit 14 ist in Fig. 1b mit dem Bezugszeichen 19 und die Einstellbarkeit bzw. Verfahrbarkeit der Oberwerkzeuge 13, 13' bzw. der Oberwerkzeugeinheiten 11, 11' mit dem Bezugszeichen 20 angedeutet.

Das jeweilige Oberwerkzeug 13, 13' und das Unterwerkzeug 15 sind bei dem hier beschriebenen Ausführungsbeispiel jeweils an einem zugeordneten Werkzeugträger 16, 16', 17 gelagert, nämlich das Oberwerkzeug 13 an einem Oberwerkzeugträger 16, das Oberwerkzeug 13' an einem Oberwerkzeugträger 16' und das Unterwerkzeug 15 an einem Unterwerkzeugträger 17, wobei der Werkzeugträger 16, 16', 17 jeweils Bestandteil der jeweiligen Oberwerkzeugeinheit 11, 11' bzw. Unterwerkzeugeinheit 14 ist. Der Unterwerkzeugträger 17 ist hier um eine zur Höhenrichtung Z parallele Unterwerkzeugträgerachse 18, die eine Drehachse bildet, drehbar, und zwar insbesondere um mindestens 180°, bevorzugt um mindestens 360°, was hier durch das Bezugszeichen 24 angedeutet ist. Zusätzlich ist der Unterwerkzeugträger 17 hier und vorzugsweise in einer zur Längsrichtung X und Höhenrichtung Z orthogonalen Querrichtung Y einstellbar bzw. verfahrbar, was hier mit dem Bezugszeichen 25 angedeutet ist. Für eine optimale Ausrichtung der Werkzeugachse 12b des Unterwerkzeugs 15 zu der jeweiligen Werkzeugachse 12a, 12a' des aktiven Oberwerkzeug 13' in verschiedenen Bearbeitungsstellungen des Aufspannrahmens 4 umfasst der Unterwerkzeugträger 17 einen oberen Trägerteil 17a in Form eines Tragbalkens 17a sowie einen seitlichen Trägerteil 17b in Form einer Tragsäule 17b, wobei der Tragbalken relativ zur Tragsäule 17b in der Höhenrichtung Z ebenfalls einstellbar bzw. verfahrbar ist, was in Fig. 1b mit dem Bezugszeichen 26 angedeutet ist.

Um nun im Bedarfsfall, insbesondere zu Servicezwecken, die erste Oberwerkzeugeinheit 11 und die zweite Oberwerkzeugeinheit 11' gegeneinander auf möglichst einfache Weise austauschen zu können, sind die erste Oberwerkzeugeinheit 11 und die zweite Oberwerkzeugeinheit 11' hier und vorzugsweise in derselben Richtung, nämlich in Querrichtung Y, über eine Verfahrstrecke 27, 27' linear verfahrbar. Die Verfahrstrecken 27, 27' sind in Fig. 1b gezeigt. Es sei darauf hingewiesen, dass die erste Oberwerkzeugeinheit 11 und/oder zweite Oberwerkzeugeinheit 11' für die Bearbeitung eines Flugzeugstrukturbauteils 2 grundsätzlich auch über die hier dargestellten Verfahrstrecken 27, 27' hinaus bewegt werden können, wenn dies notwendig ist.

Wie anhand Fig. 1a erkennbar ist, sind die Werkzeugachse 12a des Oberwerkzeugs 13 der ersten Oberwerkzeugeinheit 11 (erste Werkzeugachse) und die Werkzeugachse 12a' des Oberwerkzeugs 13' der zweiten Oberwerkzeugeinheit 11' (dritte Werkzeugachse) bezogen auf die Querrichtung Y hier und vorzugsweise über ihre jeweilige gesamte Verfahrstrecke 27, 27' ohne Versatz zueinander angeordnet, das heißt, die Werkzeugachsen 12a und 12a' überlagern sich in Querrichtung Y, und zwar unabhängig von der jeweiligen Position der Oberwerkzeugeinheiten 11, 11' relativ zur Querrichtung Y.

Die beiden Oberwerkzeugeinheiten 11, 11' verlaufen bei dem hier beschriebenen Ausführungsbeispiel auch in derselben Ebene, die sich hier orthogonal zur Höhenrichtung Z erstreckt. So weist die Bearbeitungsanlage 1 hier ein portalförmiges Gestell 22 auf, welches ein unteres Gestellteil 22a aufweist, das sich hier auch in die Querrichtung Y erstreckt. Das untere Gestellteil 22a ist beidseitig mit zwei sich in der Höhenrichtung Z erstreckenden Gestellteilen 22b, 22c verbunden, die in der Querrichtung Y voneinander beabstandet sind und ein oberes Gestellteil 22d tragen, das sich ebenfalls in der Querrichtung Y erstreckt. Das obere Gestellteil 22d weist wiederum eine Führung 28, insbesondere Linearführung, auf, die Bestandteil des oberen Gestellteils 22d ist. Das Oberwerkzeug 13 der ersten Oberwerkzeugeinheit 11 und das Oberwerkzeug 13' der zweiten Oberwerkzeugeinheit 11' sind jeweils mittels ihres jeweils zugeordneten Oberwerkzeugträgers 16, 16', an dem sie gelagert sind, an der Führung 28 beweglich geführt. Die Führung 28 ist hier und vorzugsweise also als gemeinsame Führung 28 für beide Oberwerkzeugeinheiten 11, 11' ausgebildet.

In dem Bereich innerhalb des Gestells 22 verläuft der Aufspannrahmen 4, an dem das zu bearbeitende Flugzeugstrukturbauteil 2 befestigt ist. Der Aufspannrahmen 4 ist, wie zuvor erläutert, innerhalb des Gestells 22 um die Rahmenlängsachse 21, die hier zur Stationslängsachse 6 parallel ausgerichtet ist, aber auch zu dieser gekippt werden kann, schwenkbar.

Der Vollständigkeit halber sei darauf hingewiesen, dass das Gestell 22 der Bearbeitungsanlage 1 grundsätzlich auch anders ausgebildet sein kann, um die Oberwerkzeugeinheiten 11, 11' zu tragen. Beispielsweise ist es auch denkbar, dass das Gestell 22 C-förmig ausgebildet ist, also nur ein einziges seitliches Gestellteil 22b aufweist, das das untere Gestellteil 22a mit dem oberen Gestellteil 22d verbindet. Auch ist es denkbar, auf das untere Gestellteil 22a zu verzichten, wobei dann der Unterwerkzeugträger 18 im Gegensatz zum vorliegend dargestellten Ausführungsbeispiel unabhängig vom Gestell 22 auf dem Untergrund 23 anzuordnen wäre. Es ist aber von Vorteil, den Unterwerkzeugträger 18, wie im vorliegenden Fall, fest mit dem Gestell 22, bzw. auf dem unteren Gestellteil 22a, anzuordnen, da auf diese Weise die Gesamtheit aus Gestell 22, den beiden Oberwerkzeugeinheiten 11, 11' und der Unterwerkzeugeinheit 14 relativ zum Aufspannrahmen 4 und dem Flugzeugstrukturbauteil 2 in Längsrichtung X bzw. entlang der Stationslängsachse 6 verfahren werden kann, wobei die Oberwerkzeugeinheiten 11, 11', wenn diese aktiv sind, zur Unterwerkzeugeinheit 14 immer optimal ausgerichtet bleiben. Die Verfahrbarkeit des Gestells 22 ist in Fig. 1a mit dem Bezugszeichen 29 angedeutet.

Hier und vorzugsweise sind die beiden Oberwerkzeugeinheiten 11, 11', die hier bevorzugt jeweils sowohl ein Nietwerkzeug als auch ein Bohrwerkzeug aufweisen, unabhängig voneinander verfahrbar und, wie bereits angedeutet, auch unabhängig voneinander betreibbar (aktivierbar). Um die voneinander unabhängigen Verfahrbewegungen zu ermöglichen, weist die Bearbeitungsanlage 1 hier und vorzugsweise zwei Antriebsmotoren (nicht dargestellt) auf, von denen ein erster Antriebsmotor der ersten Oberwerkzeugeinheit 11 und ein zweiter Antriebsmotor der zweiten Oberwerkzeugeinheit 11' zugeordnet ist. Die Antriebsmotoren sind unabhängig voneinander betätigbar. Grundsätzlich ist es aber auch denkbar, die erste Oberwerkzeugeinheit 11 und die zweite Oberwerkzeugeinheit 11' über einen gemeinsamen Antriebsmotor zu verfahren.

Zusätzlich zu diesen beiden Antriebsmotoren können noch weitere Antriebsmotoren vorgesehen sein, über die die weiteren genannten Drehbewegungen und Linearbewegungen der obigen Komponenten der Bearbeitungsanlage 1 bewirkt werden können. Auch diese Antriebsmotoren können insbesondere unabhängig voneinander betätigt werden. So kann die vorschlagsgemäße Bearbeitungsanlage 1 ferner einen oder mehrere der folgenden Antriebsmotoren aufweisen:
- einen Antriebsmotor für die Drehbewegung des Unterwerkzeugträgers 17, insbesondere relativ zum unteren Gestellteil 22a,
- einen Antriebsmotor für die Linearbewegung des Unterwerkzeugträgers 17, insbesondere relativ zum unteren Gestellteil 22a,
- einen Antriebsmotor für die Linearbewegung des Unterwerkzeugs 15, insbesondere relativ zum Unterwerkzeugträger 17,
- einen Antriebsmotor für eine Linearbewegung des Tragbalkens 17a des Unterwerkzeugträgers 17, insbesondere relativ zur Tragsäule 17b des Unterwerkzeugträgers 17,
- einen Antriebsmotor für die Linearbewegung des unteren Gestellteils 22a bzw. des Gestells 22, insbesondere relativ zum Untergrund 23.

Nach einer weiteren Lehre, der ebenfalls eigenständige Bedeutung zukommt, wird ein Verfahren zur Bearbeitung eines Flugzeugstrukturbauteils 2 mit einer vorschlagsgemäßen Bearbeitungsanlage 1 beansprucht.

Wesentlich bei dem vorschlagsgemäßen Verfahren ist, dass durch die Ausbildung der vorschlagsgemäßen Bearbeitungsanlage 1 während der Bearbeitung, insbesondere während eines Niet- oder Bohrvorgangs, des Flugzeugstrukturbauteils 2 eine der Oberwerkzeugeinheiten 11, 11' betrieben wird, während die andere der Oberwerkzeugeinheiten 11, 11' außer Betrieb ist und/oder in einer Serviceposition angeordnet ist. Auf diese Weise wird ermöglicht, eine der Oberwerkzeugeinheiten 11, 11' zu reparieren oder zu warten, beispielsweise ein verklemmtes Nietelement zu entfernen, während die jeweils andere der Oberwerkzeugeinheiten 11, 11' die Bearbeitung des Flugzeugstrukturbauteils 2 anstelle der zu reparierenden bzw. zu wartenden Oberwerkzeugeinheit übernimmt. Stillstandzeiten der Bearbeitungsanlage 1 können auf diese Weise auf ein Minimum reduziert werden.

## Patentansprüche

1. Bearbeitungsanlage für Flugzeugstrukturbauteile (2) mit einer Bearbeitungsstation (3) umfassend einen Aufspannrahmen (4) zur Aufnahme des jeweils zu bearbeitenden Flugzeugstrukturbauteils (2), wobei sich der Aufspannrahmen (4) entlang einer in eine Längsrichtung (X) verlaufenden Stationslängsachse (6) erstreckt, und eine Bearbeitungseinheit (5) für die Bearbeitung des Flugzeugstrukturbauteils (2), die eine erste Oberwerkzeugeinheit (11) mit einem entlang einer ersten Werkzeugachse (12a) ausgerichteten Oberwerkzeug (13) und eine Unterwerkzeugeinheit (14) mit einem entlang einer zweiten Werkzeugachse (12b) ausgerichteten Unterwerkzeug (15) aufweist, wobei die erste Werkzeugachse (12a) und die zweite Werkzeugachse (12b) parallel zu einer zur Längsrichtung (X) winkeligen, insbesondere orthogonalen, Höhenrichtung (Z) ausgerichtet und/oder ausrichtbar sind und wobei in mindestens einer Bearbeitungsposition des Oberwerkzeugs (13) der ersten Oberwerkzeugeinheit (11) und in mindestens einer Bearbeitungsposition des Unterwerkzeugs (15) der Unterwerkzeugeinheit (14) die erste Werkzeugachse (12a) und die zweite Werkzeugachse (12b) koaxial zueinander ausgerichtet sind,
wobei
die Bearbeitungseinheit (5) eine zweite Oberwerkzeugeinheit (11') mit einem entlang einer dritten Werkzeugachse (12a') ausgerichteten Oberwerkzeug (13') aufweist, wobei die dritte Werkzeugachse (12a') parallel zu der Höhenrichtung (Z) ausgerichtet oder ausrichtbar ist, und dass in mindestens einer Bearbeitungsposition des Oberwerkzeugs (13') der zweiten Oberwerkzeugeinheit (11') und in mindestens einer Bearbeitungsposition des Unterwerkzeugs (15) der Unterwerkzeugeinheit (14) die zweite Werkzeugachse (12b) und die dritte Werkzeugachse (12a') koaxial zueinander ausgerichtet sind, **dadurch gekennzeichnet, dass** die zwei Oberwerkzeugeinheiten (11, 11') mit ein und derselben Unterwerkzeugeinheit (14) zusammenwirken können und die Oberwerkzeugeinheiten (11, 11') einander bei der Bearbeitung des Flugzeugstrukturbauteils (2) im Bedarfsfall ersetzen können.

2. Bearbeitungsanlage nach Anspruch 1, **dadurch gekennzeichnet, dass** die erste Oberwerkzeugeinheit (11) und die zweite Oberwerkzeugeinheit (11'), in derselben Richtung (Y), insbesondere in einer zur Längsrichtung (X) und Höhenrichtung (Z) orthogonalen Querrichtung (Y), über eine Verfahrstrecke (27, 27') verfahrbar, insbesondere linear verfahrbar, sind.

3. Bearbeitungsanlage nach Anspruch 2, **dadurch gekennzeichnet, dass** die erste Werkzeugachse (12a) und die dritte Werkzeugachse (12a') bezogen auf die Richtung (Y) über zumindest einen Teil der Verfahrstrecke (27, 27'), bevorzugt über den größten Teil der Verfahrstrecke (27, 27'), besonders bevorzugt über die gesamte Verfahrstrecke (27, 27'), keinen Versatz zueinander aufweisen.

4. Bearbeitungsanlage nach einem der vorhergehenden Ansprüche, **dadurch gekennzeichnet, dass** die erste Oberwerkzeugeinheit (11) und die zweite Oberwerkzeugeinheit (11') in derselben Ebene, insbesondere in einer zur Höhenrichtung (Z) orthogonalen Ebene, über eine Verfahrstrecke (27, 27') verfahrbar, insbesondere linear verfahrbar, sind.

5. Bearbeitungsanlage nach einem der vorhergehenden Ansprüche, **dadurch gekennzeichnet, dass** die erste Oberwerkzeugeinheit (11) und die zweite Oberwerkzeugeinheit (11'), an einer gemeinsamen Führung (28), insbesondere Linearführung, über eine Verfahrstrecke (27, 27') verfahrbar, insbesondere linear verfahrbar, sind.

6. Bearbeitungsanlage nach Anspruch 5, **dadurch gekennzeichnet, dass** das Oberwerkzeug (13) der ersten Oberwerkzeugeinheit (11) und das Oberwerkzeug (13') der zweiten Oberwerkzeugeinheit (11') jeweils an einem eigenen Oberwerkzeugträger (16, 16') gelagert ist, wobei die Oberwerkzeugträger (16, 16') an der Führung beweglich geführt sind.

7. Bearbeitungsanlage nach Anspruch 5 oder 6, **dadurch gekennzeichnet, dass** die Führung (28) Bestandteil eines oberen Gestellteils (22d) eines insbesondere portalförmigen oder C-förmigen Gestells (22) ist.

8. Bearbeitungsanlage nach einem der vorhergehenden Ansprüche, **dadurch gekennzeichnet, dass** die Oberwerkzeugeinheiten (11, 11') unabhängig voneinander verfahrbar und/oder unabhängig voneinander in der Bearbeitungseinheit (5) betreibbar sind.

9. Bearbeitungsanlage nach einem der vorhergehenden Ansprüche, **dadurch gekennzeichnet, dass** mindestens eine der Oberwerkzeugeinheiten (11, 11'), insbesondere die erste Oberwerkzeugeinheit (11, 11'), in eine Serviceposition verfahrbar ist, in der die Oberwerkzeugeinheit (11, 11') so weit von der anderen Oberwerkzeugeinheit (11, 11'), insbesondere der zweiten Oberwerkzeugeinheit (11'), beabstandet ist, dass das Oberwerkzeug (13, 13') der anderen Oberwerkzeugeinheit (11, 11') in mindestens einer Bearbeitungsposition, bevorzugt in mehreren Bearbeitungspositionen, besonders bevorzugt in sämtlichen Bearbeitungspositionen, in der/denen ihre Werkzeugachse (12a, 12a') koaxial zur zweiten Werkzeugachse (12b) ausgerichtet ist, anordenbar ist.

10. Bearbeitungsanlage nach einem der vorhergehenden Ansprüche, **dadurch gekennzeichnet, dass** das Oberwerkzeug (13) der ersten Oberwerkzeugeinheit (11) und/oder das Oberwerkzeug (13') der zweiten Oberwerkzeugeinheit (11') ein Nietwerkzeug oder Bohrwerkzeug ist, vorzugsweise, dass die erste Oberwerkzeugeinheit (11) und/oder die zweite Oberwerkzeugeinheit (11') jeweils eine kombinierte Oberwerkzeugeinheit (11, 11') mit einem Nietwerkzeug und einem Bohrwerkzeug als Oberwerkzeug (13, 13') ist.

11. Bearbeitungsanlage nach einem der vorhergehenden Ansprüche, **dadurch gekennzeichnet, dass** die Bearbeitungsanlage (1) einen ersten Antriebsmotor für die Verfahrbewegung, insbesondere Linearbewegung, der ersten Oberwerkzeugeinheit (11) und einen zweiten Antriebsmotor für die Verfahrbewegung, insbesondere Linearbewegung, der zweiten Oberwerkzeugeinheit (11') aufweist, vorzugsweise, dass der erste Antriebsmotor und der zweite Antriebsmotor unabhängig voneinander betätigbar sind, und/oder, dass die Bearbeitungsanlage (1) einen gemeinsamen Antriebsmotor für die Verfahrbewegung, insbesondere Linearbewegung, der ersten Oberwerkzeugeinheit (11) und für die Verfahrbewegung, insbesondere Linearbewegung, der zweiten Oberwerkzeugeinheit (11') aufweist.

12. Verfahren zur Bearbeitung eines Flugzeugstrukturbauteils (2) mit einer Bearbeitungsanlage (1) nach einem der vorhergehenden Ansprüche,
**dadurch gekennzeichnet,**
**dass** während der Bearbeitung des Flugzeugstrukturbauteils (2), insbesondere während eines Niet- oder Bohrvorgangs, eine der Oberwerkzeugeinheiten (11, 11') betrieben wird, während die andere der Oberwerkzeugeinheiten (11, 11') außer Betrieb ist und/oder in einer Serviceposition angeordnet ist.

## Claims

1. Processing installation for aircraft structural components (2) having a processing station (3) comprising a clamping frame (4) for receiving the aircraft structural component (2) which is intended to be processed, wherein the clamping frame (4) extends along a station longitudinal axis (6) which extends in a longitudinal direction (X), and a processing unit (5) for processing the aircraft structural component (2) which has a first upper tool unit (11) having an upper tool (13) which is orientated along a first tool axis (12a) and a lower tool unit (14) having a lower tool (15) which is orientated along a second tool axis (12b), wherein the first tool axis (12a) and the second tool axis (12b) are orientated and/or can be orientated parallel with a vertical direction (Z) which is angled, in particular orthogonal, with respect to the longitudinal direction (X), and wherein in at least one processing position of the upper tool (13) of the first upper tool unit (11) and in at least one processing position of the lower tool (15) of the lower tool unit (14) the first tool axis (12a) and the second tool axis (12b) are orientated coaxially relative to each other,
wherein
the processing unit (5) has a second upper tool unit (11') having an upper tool (13') which is orientated along a third tool axis (12a'), wherein the third tool axis (12a') is orientated or can be orientated parallel with the vertical direction (Z), and wherein in at least one processing position of the upper tool (13') of the second upper tool unit (11') and in at least one processing position of the lower tool (15) of the lower tool unit (14) the second tool axis (12b) and the third tool axis (12a') are orientated coaxially relative to each other, **characterized in that** the two upper tool units (11, 11') can cooperate with one and the same lower tool unit (14), and the upper tool units (11, 11') can replace each other where necessary during the processing of the aircraft structural component (2).

2. Processing installation according to Claim 1, **characterized in that** the first upper tool unit (11) and the second upper tool unit (11') can be moved in the same direction (Y), in particular in a transverse direction (Y) which is orthogonal with respect to the longitudinal direction (X) and vertical direction (Z), over a travel path (27, 27'), in particular can be moved in a linear manner.

3. Processing installation according to Claim 2, **characterized in that** the first tool axis (12a) and the third tool axis (12a') with respect to the direction (Y) over at least a portion of the travel path (27, 27'), preferably over the main portion of the travel path (27, 27'), particularly preferably over the entire travel path (27, 27'), have no offset with respect to each other.

4. Processing installation according to one of the preceding claims, **characterized in that** the first upper tool unit (11) and the second upper tool unit (11') can be moved in the same plane, in particular in a plane which is orthogonal with respect to the vertical direction (Z), over a travel path (27, 27'), in particular can be moved in a linear manner.

5. Processing installation according to one of the preceding claims, **characterized in that** the first upper tool unit (11) and the second upper tool unit (11') can be moved on a common guide (28), in particular a linear guide, over a travel path (27, 27'), in particular can be moved in a linear manner.

6. Processing installation according to Claim 5, **characterized in that** the upper tool (13) of the first upper tool unit (11) and the upper tool (13') of the second upper tool unit (11') are each supported on a separate upper tool carrier (16, 16'), wherein the upper tool carriers (16, 16') are movably guided on the guide.

7. Processing installation according to Claim 5 or 6, **characterized in that** the guide (28) is a component of an upper frame portion (22d) of an in particular portal-like or C-shaped frame (22).

8. Processing installation according to one of the preceding claims, **characterized in that** the upper tool units (11, 11') can be moved independently of each other and/or can be operated independently of each other in the processing unit (5).

9. Processing installation according to one of the preceding claims, **characterized in that** at least one of the upper tool units (11, 11'), in particular the first upper tool unit (11, 11'), can be moved into a service position, in which the upper tool unit (11, 11') is spaced so far apart from the other upper tool unit (11, 11'), in particular the second upper tool unit (11'), that the upper tool (13, 13') of the other upper tool unit (11, 11') can be arranged in at least one processing position, preferably in several processing positions, in a particularly preferred manner in all processing positions, in which the tool axis (12a, 12a') thereof is orientated coaxially relative to the second tool axis (12b).

10. Processing installation according to one of the preceding claims, **characterized in that** the upper tool (13) of the first upper tool unit (11) and/or the upper tool (13') of the second upper tool unit (11') is a rivet tool or a drill tool, preferably in that the first upper tool unit (11) and/or the second upper tool unit (11') is in each case a combined upper tool unit (11, 11') having a rivet tool and a drill tool as an upper tool (13, 13').

11. Processing installation according to one of the preceding claims, **characterized in that** the processing installation (1) has a first drive motor for the travel movement, in particular linear movement, of the first upper tool unit (11) and a second drive motor for the travel movement, in particular linear movement, of the second upper tool unit (11'), preferably **in that** the first drive motor and the second drive motor can be activated independently of each other, and/or **in that** the processing installation (1) has a common drive motor for the travel movement, in particular linear movement, of the first upper tool unit (11) and for the travel movement, in particular linear movement, of the second upper tool unit (11').

12. Method for processing an aircraft structural component (2) having a processing installation (1) according to one of the preceding claims,
**characterized**
**in that** during the processing of the aircraft structural component (2), in particular during a riveting or drilling operation, one of the upper tool units (11, 11') is operated, whilst the other of the upper tool units (11, 11') is out of operation and/or is arranged in a service position.

## Revendications

1. Installation d'usinage pour éléments structuraux d'aéronefs (2) comportant une station d'usinage (3) comprenant un cadre de serrage (4) servant à la réception de l'élément structural d'aéronef (2) à usiner respectivement, le cadre de serrage (4) s'étendant le long d'un axe longitudinal de station (6) s'étendant dans une direction longitudinale (X), et une unité d'usinage (5) pour l'usinage de l'élément structural d'aéronef (2), qui présente une première unité d'outil supérieur (11) dotée d'un outil supérieur (13) orienté le long d'un premier axe d'outils (12a) et une unité d'outil inférieur (14) dotée d'un outil inférieur (15) orienté le long d'un deuxième axe d'outil (12b), le premier axe d'outil (12a) et le deuxième axe d'outil (12b) étant orientés et/ou pouvant être orientés parallèlement à une direction verticale (Z) angulaire, en particulier orthogonale, par rapport à la direction longitudinale (X), et le premier axe d'outil (12a) et le deuxième axe d'outil (12b) étant orientés coaxialement l'un par rapport à l'autre dans au moins une position d'usinage de l'outil supérieur (13) de la première unité d'outil supérieur (11) et dans au moins une position d'usinage de l'outil inférieur (15) de l'unité d'outil inférieur (14),
l'unité d'usinage (5) présentant une deuxième unité d'outil supérieur (11') dotée d'un outil supérieur (13') orienté le long d'un troisième axe d'outil (12a'), le troisième axe d'outil (12a') étant orienté ou pouvant être orienté parallèlement à la direction verticale (Z), et le deuxième axe d'outil (12b) et le troisième axe d'outil (12a') étant orientés coaxialement l'un par rapport à l'autre dans au moins une position d'usinage de l'outil supérieur (13') de la deuxième unité d'outil supérieur (11') et dans au moins une position d'usinage de l'outil inférieur (15) de l'unité d'outil inférieur (14), **caractérisée en ce que** les deux unités d'outil supérieur (11, 11') peuvent coopérer avec une seule et même unité d'outil inférieur (14) et les unités d'outil supérieur (11, 11') peuvent se substituer les unes aux autres en cas de besoin lors de l'usinage de l'élément structural d'aéronef (2).

2. Installation d'usinage selon la revendication 1, **caractérisée en ce que** la première unité d'outil supérieur (11) et la deuxième unité d'outil supérieur (11') sont déplaçables, en particulier déplaçables linéairement, sur un trajet de déplacement (27, 27') dans la même direction (Y), en particulier dans une direction transversale (Y) orthogonale à la direction longitudinale (X) et à la direction verticale (Z).

3. Installation d'usinage selon la revendication 2, **caractérisée en ce que** le premier axe d'outil (12a) et le troisième axe d'outil (12a') ne présentent aucun décalage l'un par rapport à l'autre par rapport à la direction (Y) sur au moins une partie du trajet de déplacement (27, 27'), de préférence sur la majeure partie du trajet de déplacement (27, 27'), de manière particulièrement préférée sur tout le trajet de déplacement (27, 27').

4. Installation d'usinage selon l'une des revendications précédentes, **caractérisée en ce que** la première unité d'outil supérieur (11) et la deuxième unité d'outil supérieur (11') sont déplaçables, en particulier déplaçables linéairement, sur un trajet de déplacement (27, 27') dans le même plan, en particulier dans un plan orthogonal à la direction verticale (Z).

5. Installation d'usinage selon l'une des revendications précédentes, **caractérisée en ce que** la première unité d'outil supérieur (11) et la deuxième unité d'outil supérieur (11') sont déplaçables, en particulier déplaçables linéairement, sur un trajet de déplacement (27, 27') sur un guide commun (28), en particulier un guide linéaire.

6. Installation d'usinage selon la revendication 5, **caractérisée en ce que** l'outil supérieur (13) de la première unité d'outil supérieur (11) et l'outil supérieur (13') de la deuxième unité d'outil supérieur (11') sont montés respectivement sur un support d'outil supérieur (16, 16') propre, les supports d'outil supérieur (16, 16') étant guidés de manière mobile sur le guide.

7. Installation d'usinage selon la revendication 5 ou 6, **caractérisée en ce que** le guide (28) fait partie d'une partie supérieure de bâti (22d) d'un bâti (22) en particulier en forme de portique ou en forme de C.

8. Installation d'usinage selon l'une des revendications précédentes, **caractérisée en ce que** les unités d'outil supérieur (11, 11') sont déplaçables indépendamment les unes des autres et/ou peuvent fonctionner indépendamment les unes des autres dans l'unité d'usinage (5).

9. Installation d'usinage selon l'une des revendications précédentes, **caractérisée en ce qu'**au moins l'une des unités d'outil supérieur (11, 11'), en particulier la première unité d'outil supérieur (11, 11'), est déplaçable dans une position de service dans laquelle l'unité d'outil supérieur (11, 11') est espacée tellement loin de l'autre unité d'outil supérieur (11, 11'), en particulier de la deuxième unité d'outil supérieur (11'), que l'outil supérieur (13, 13') de l'autre unité d'outil supérieur (11, 11') peut être disposé dans au moins une position d'usinage, de préférence dans plusieurs positions d'usinage, de manière particulièrement préférée dans toutes les positions d'usinage, dans laquelle/lesquelles son axe d'outil (12a, 12a') est orienté coaxialement au deuxième axe d'outil (12b) .

10. Installation d'usinage selon l'une des revendications précédentes, **caractérisée en ce que** l'outil supérieur (13) de la première unité d'outil supérieur (11) et/ou l'outil supérieur (13') de la deuxième unité d'outil supérieur (11') est un outil de rivetage ou un outil de perçage, de préférence **en ce que** la première unité d'outil supérieur (11) et/ou la deuxième unité d'outil supérieur (11') est/sont respectivement une unité d'outil supérieur (11, 11') combinée dotée d'un outil de rivetage et d'un outil de perçage comme outil supérieur (13, 13').

11. Installation d'usinage selon l'une des revendications précédentes, **caractérisée en ce que** l'installation d'usinage (1) présente un premier moteur d'entraînement pour le mouvement de déplacement, en particulier le mouvement linéaire, de la première unité d'outil supérieur (11) et un deuxième moteur d'entraînement pour le mouvement de déplacement, en particulier le mouvement linéaire, de la deuxième unité d'outil supérieur (11'), de préférence **en ce que** le premier moteur d'entraînement et le deuxième moteur d'entraînement peuvent être actionnés indépendamment l'un de l'autre, et/ou **en ce que** l'installation d'usinage (1) présente un moteur d'entraînement commun pour le mouvement de déplacement, en particulier le mouvement linéaire, de la première unité d'outil supérieur (11) et pour le mouvement de déplacement, en particulier le mouvement linéaire, de la deuxième unité d'outil supérieur (11').

12. Procédé d'usinage d'un élément structural d'aéronef (2) à l'aide d'une installation d'usinage (1) selon l'une des revendications précédentes,
**caractérisé en ce que**
pendant l'usinage de l'élément structural d'aéronef (2), en particulier pendant une opération de rivetage ou de perçage, l'une des unités d'outil supérieur (11, 11') fonctionne, tandis que l'autre des unités d'outil supérieur (11, 11') est hors service et/ou est disposée dans une position de service.
